# EUROPEAN PATENT SPECIFICATION

(11) **EP 4 284 700 B1**
(45) Date of publication and mention of the grant of the patent: **02.04.2025**
(21) Application number: 22701276.2
(22) Date of filing: 27.01.2022
(51) Int. Cl.: B62J 17/02, B62J 17/10, B62K 11/04

(54) **MOTORCYCLE WITH AERODYNAMICALLY IMPROVED REAR FORK**
MOTORRAD MIT AERODYNAMISCH VERBESSERTER HINTERRADGABEL
MOTOCYCLETTE AVEC FOURCHE ARRIÈRE À AÉRODYNAMISME AMÉLIORÉ

(30) Priority: 01.02.2021 IT 202100002009
(43) Date of publication of application: 06.12.2023
(73) Proprietor: Piaggio & C. S.P.A., 56025 Pontedera Pisa (IT)
(72) Inventor: DE LUCA, Marco, 56025 Pontedera (PI) (IT)
(74) Representative: Mannucci, Michele
(86) International application number: PCT/IB2022/050707
(87) International publication number: WO 2022/162572

(56) References cited:
- EP-B1- 1 496 241
- JP-A- 2003 137 160
- MCLAREN PETER: "Aprilia: A wing creates downforce... | MotoGP | Feature | Crash", CRASH, 26 March 2019 (2019-03-26), XP055842815, Retrieved from the Internet <URL:https://www.crash.net/motogp/feature/916072/1/aprilia-wing-creates-downforce> [retrieved on 20210920]
- BEELER JENSEN: "Ducati Desmosedici GP20 Livery Revealed in Italy - Asphalt & Rubber", ASPHALT & RUBBER, 23 January 2020 (2020-01-23), XP055842869, Retrieved from the Internet <URL:https://www.asphaltandrubber.com/bikes/ducati-desmosedici-gp20/> [retrieved on 20210920]

## Description

### TECHNICAL FIELD

The present invention relates to motorcycles, for example, but not exclusively, racing motorcycles.

### BACKGROUND ART

The rear wheel of motorcycles is usually supported by a rear fork, with which a shock absorber is associated. The rear fork has two arms, between which the rear driving wheel is arranged. The two arms are connected to a joining structure, which is in turn pivoted to the frame of the motorcycle.

Turbulences that negatively affect the aerodynamic efficiency of the motorcycle are generated in the rear area of the motorcycle, between the rear driving wheel and the frame, and the rear fork.

In "McLaren Peter "Aprilia: A wing creates downforce...., 26 March 2019, XP055842815, which can be found on the Internet at the URL: "https://www.crash.net/motogp/feature/916071/1/aprilia-wing-creates-downforce" illustrates a motorcycle with an upside down airfoil close to the rear driving wheel, and discloses the features of the preamble of claim 1.

It would thus be desirable to improve motorcycles, in particular racing motorcycles, reducing the negative aerodynamic phenomena that are generated between rear driving wheel, rear fork and frame.

### SUMMARY OF THE INVENTION

To overcome or reduce the aforesaid problems of motorcycles of the current art, a motorcycle is provided comprising: a frame, an engine mounted on the frame; a front steered wheel; a rear driving wheel; a fairing at least partially surrounding the engine and the frame and having a lower wall extending under the engine from a front area of the motorcycle toward the rear driving wheel; and a rear fork hinged to the frame about an axis parallel to a rotation axis of the rear driving wheel. The rear fork comprises two arms for supporting the rear driving wheel, connected to each other by a joining structure having a rear surface facing the rear driving wheel. Advantageously, in a side view a first portion of the rear surface of the joining structure and a rear portion of the fairing, which extends from the lower wall toward the rear fork, together form a diffusion channel for an air flow between the rear fork and the rear driving wheel, generated by the forward movement of the motorcycle. The diffusion channel improves the conditions of motion of the air in the area of the rear driving wheel and of the rear fork.

In practical embodiments, a second portion of the rear surface of the joining structure is curved and substantially parallel to the profile of the rear driving wheel.

In at least one angular position of the rear fork, in a side view, i.e., in a section along a vertical median plane of the motorcycle, the rear portion of the fairing can be substantially tangent to the first portion of the rear surface of the joining structure.

In substance, the rear portion of the fairing and the rear surface of the joining structure can define, in the vertical median plane of the motorcycle, a guide profile for the air flow around the rear driving wheel.

Further advantageous features and embodiments of the motorcycle are defined in the appended claims, which form an integral part of the present description.

### BRIEF DESCRIPTION OF THE DRAWINGS

The invention will be better understood by following the description and the accompanying drawings, which illustrate a non-limiting example of embodiment of the invention. More in particular, in the drawing:
Fig.1 shows a side view of a motorcycle in an embodiment;
Fig.2 shows a front view of the motorcycle of Fig.1;
Fig.3 shows an axonometric view of the motorcycle;
Fig.4 shows a detail of the front part of the motorcycle in a side view and partial section on a median plane;
Fig.5 shows a detail of the front part of the motorcycle in an axonometric view;
Fig. 6 shows a detail of the lower rear part of the motorcycle in an axonometric bottom view;
Fig.7 shows a detail of the rear part of the motorcycle in a side view;
Fig.8 shows a schematic section along a horizontal plane of the rear fork and of part of the rear driving wheel;
Fig.9 shows a schematic side view of the motorcycle with indication of the adhesion forces generated by the air flow in the lower part of the fairing; and
Fig.10 shows a side view analogous to the view of Fig.7 in a further embodiment.

### DETAILED DESCRIPTION

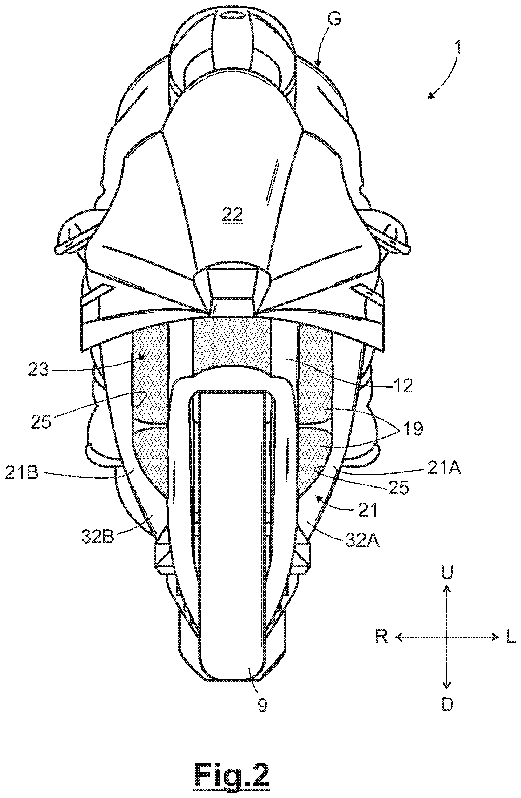

In the context of the present description, unless otherwise specified, the terms above, below, top, bottom, right, left, upper, lower, front, rear, in front, behind, and analogous terms defining spatial positions of elements or components of the motorcycle or air flows around it, refer to a condition with the motorcycle in normal ride attitude. The term "vertical" indicates a direction parallel to the direction of the force of gravity and the term "horizontal" indicates a direction orthogonal to the vertical direction. In Fig. 2 the arrows L and R indicate the left and right direction and the arrows U and D indicate the vertical upward and downward direction.

In general terms, and as will be described in greater detail hereunder with reference to a non-limiting exemplary embodiment, a motorcycle comprising a fairing with a front portion facing a front steered wheel is provided. The front portion comprises: a front opening extending for an upper part of the vertical extension of the front portion of the fairing; and a covering for a lower part of the vertical extension of the front portion of the fairing. The covering comprises a front outer surface and a rear inner surface, and divides a descending air flow, generated by the forward movement of the motorcycle, into an outer partial flow that laps the front outer surface, and an inner partial flow that laps the rear inner surface. In embodiments described herein, the front outer surface and the rear inner surface together form an aerodynamic profile with a leading edge positioned along the perimeter edge of the front opening of the fairing.

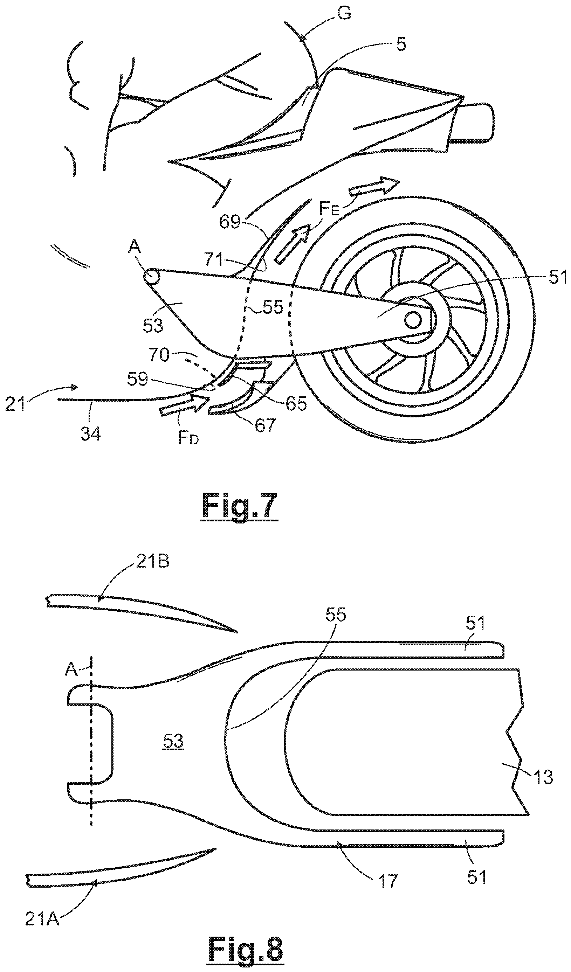

With reference to the embodiment illustrated in the accompanying drawings, a motorcycle 1 comprises a frame 3, to which a seat 5 and an engine 7 are fixed. Frontally, the motorcycle has a front steered wheel 9, connected to a handlebar 11 and associated with a suspension, which - in the example illustrated - comprises a front fork 12. The motorcycle 1 further comprises a rear driving wheel 13, connected to the engine 7 via a transmission, for example a chain, not shown. The rear driving wheel 13 is supported by a rear fork 17 pivoted to the frame 3 about a hinge axis A (Fig. 7), parallel to the rotation axis of the rear driving wheel 13.

The engine 7 is cooled by means of a liquid coolant, for example water. The heat extracted from the engine 7 must be dissipated into the environment. In the illustrated embodiment, for this purpose at least one radiator 19, typically mounted between the engine 7 and the front steered wheel 9, is provided. In the illustrated embodiment, there are two radiators 19, for example one radiator for cooling the water (or other fluid coolant) and one radiator for cooling the lubricating oil. In general terms, the motorcycle 1 can comprise a single radiator, for example for water coolant or for lubricating oil, or two radiators, one for water and one for oil, as in the schematic example represented here. In the context of the present description and of the appended claims, the term liquid coolant is also meant as lubricating oil.

Although the features of the fairing described here are particularly advantageous in motorcycles that have at least one radiator, preferably positioned with its main surface orthogonal to the direction of movement of the vehicle, some advantages can also be achieved in motorcycles with air cooling and/or with a different position of the radiator or radiators. The direction of movement is meant as the direction of movement with the steering of the motorcycle not turned, i.e. traveling in a straight line.

When at least one radiator 19 is provided, the heat is removed by an air flow, generated by the movement of the motorcycle, which encounters the radiator 19 and passes through it, lapping the ducts through which the liquid coolant (water, oil) passes. In the embodiment illustrated, there are two radiators 19.

The frame 3 and the engine 7 are at least partially protected by a front fairing 21, which comprises a front windshield 22 to protect the handlebar and the on-board instrumentation, as well as the driver, over the front steered wheel 9.

The fairing 21 also has a left side portion 21A and a right side portion 21B at least partly flanking the engine 7 and structured to deflect the air beyond the driver G of the motorcycle 1, when the motorcycle is in movement. Reference number 34 indicates a bottom or lower wall of the fairing 21, facing the ground on which the motorcycle is supported and which joins the left side portion 21A and the right side portion 21B of the fairing. The bottom 34 extends under the radiator 19 and under the engine 7 of the motorcycle 1, and from a front portion of the fairing 21 toward the rear driving wheel 13.

The front portion of the fairing 21 extends from the windshield 22, behind the front steered wheel 9 and to the bottom 34, and between the left side portion 21A and the right side portion 21B of the fairing. The front portion has a front opening 23 surrounded by an edge 25. The front opening 23 allows the entry of the air flow generated by the forward movement of the motorcycle inside of the fairing toward the engine 7. If at least one radiator is present, the air flow strikes the radiator, which is typically positioned inside the fairing 21, behind the front opening 23, between the edge 25 of the front opening 23 and the engine 7.

The front steered wheel 9 and the front fork 12 form an obstacle that obstructs the movement of the air flow toward the inside of the fairing 21 and in particular toward the radiator 19 or the radiators 19, when present.

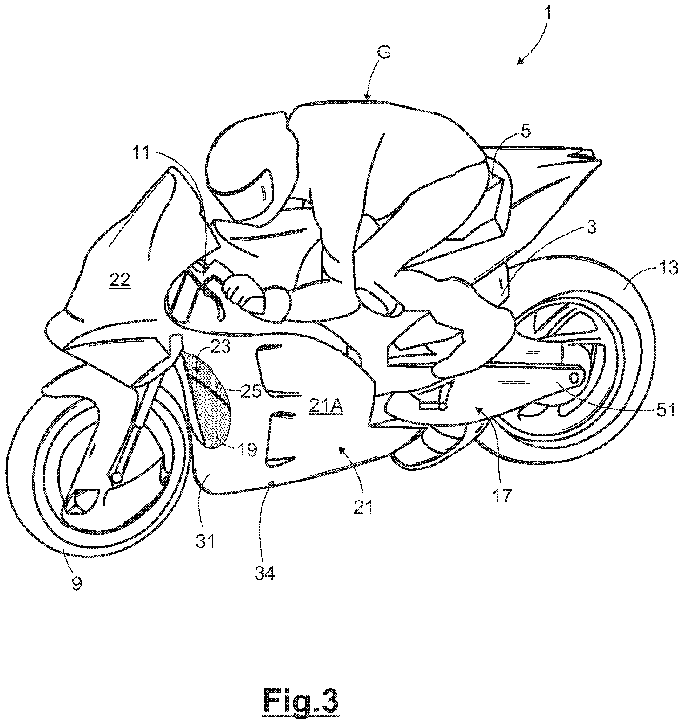

The front opening 23, which allows the cooling air to enter the radiator 19, does not involve the whole front portion of the fairing 21, but extends from a point of maximum height, adjacent to the windshield 22, toward the bottom of the fairing 21, only for a portion of the extension in height of the front portion of the fairing, due to the presence of a front covering 31, which extends from the bottom 34 of the fairing 21 toward the windshield 22. If the motorcycle has at least one radiator 19 positioned behind the opening 23, at least one portion of the front surface of said at least one radiator is partially covered by the front covering 31 formed by the fairing 21. This covering 31 forms, in the lower area of the front portion of the fairing 21, a pocket (Fig.3), which partly covers the front surface, i.e., the surface facing the direction of movement of the motorcycle 1, of the radiator 19, in the example illustrated of the lower radiator 19, while the upper radiator 19 is completely free, i.e., its front surface is more or less completely visible through the front opening 23 observing in the direction opposite to the direction of forward movement of the motorcycle 1. The edge 25 that surrounds the front opening 23 is therefore not completely external to the useful surface of the radiator, but has a lower portion that is located at a height substantially higher than the lowest point of the radiator 19.

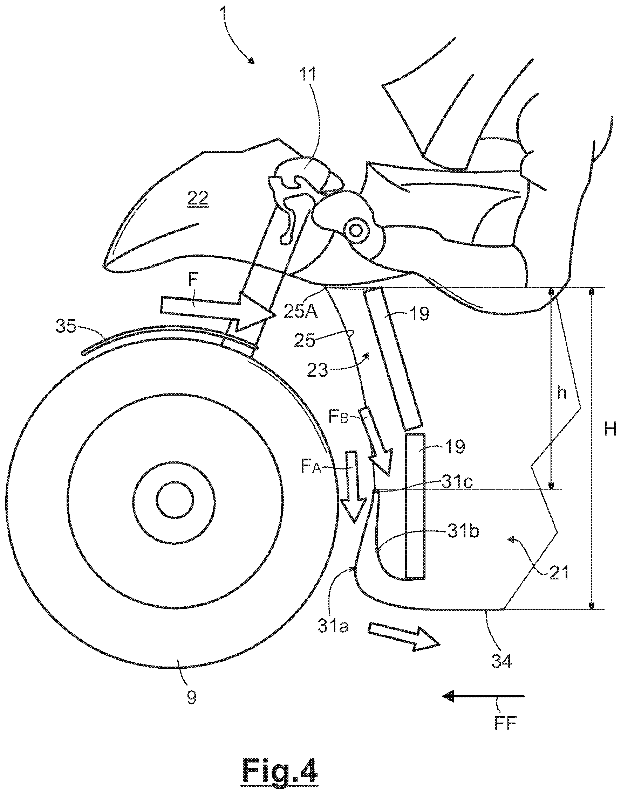

The portion of fairing 21 that forms the covering 31 of the radiator 19 defines an aerodynamic profile, in the present context again indicated with the reference number 31, as visible in particular in Fig.4. More in particular, the covering 31 comprises a front outer surface 31a facing forward with respect to the direction of forward movement (arrow FF) of the motorcycle 1. The covering 31 further comprises a rear inner surface 31b facing in the direction opposite the direction of forward movement of the motorcycle 1 and hence facing the radiator 19. The front outer surface 31a and the rear inner surface 31b join to form a leading edge 31c (see in particular Fig.4), which forms part of the edge 25 that surrounds the front opening 23.

With reference to Fig.4, reference number 25A indicates the highest point of the edge 25 that surrounds the front opening 23. Therefore, 25A is the upper end of the front opening 23. Normally, this point 25A is located on the vertical median plane of the motorcycle 1. In Fig. 4, the letter H indicates the distance of the upper end of the front opening 23 from the bottom 34 of the fairing 21. The letter h indicates the distance between the upper end 25A of the front opening 25 and the leading edge 31c of the aerodynamic profile formed by the covering 31. The distance h is preferably equal to or greater than 20% of the distance H. Preferably, the distance h is equal to or less than 80% of the distance H. For example, the distance h can be between 10% and 60%, preferably between 20% and 50% of the distance H, and more preferably between 20% and 50%, or between 20% and 40% of H.

The aerodynamic profile 31, and more precisely its front outer surface 31a, is joined at the sides to the left side portion 21A and to the right side portion 21B (Fig.2) of the fairing 21 and is joined at the bottom to the lower wall or bottom 34 of the fairing 21. Preferably, the front outer surface 31a is tangent to the side portions 21A, 21B and to the bottom 34, and defines a joining curve without corners, for aerodynamic purposes.

The rear inner surface 31b is located at a certain distance from the front surface of the radiator 19, so as to form a channel for the entry of an air flow in a direction approximately parallel to the front surface of the radiator 19, between said radiator and the rear inner surface 31b of the covering 31.

In a side view, the front outer surface 31b of the covering 31 can be mainly convex, but can have a portion close to the leading edge 31c, with a concave shape, as can be seen in the accompanying drawings. In practice, in some embodiments, in a sectional view of the fairing 21 according to a vertical median plane, the front outer surface 31a has, in sequence and starting from the leading edge 31c, a profile with a first concave portion and a second convex portion. The convex portion continues downward until it joins to a lower outer surface of the portion of lower fairing 34 that extends under the engine of the motorcycle.

However, the front outer surface 31a is mainly (or completely) convex, i.e., it has a convexity facing forward, while the rear inner surface 31b is mainly (or completely) concave, i.e., has a concavity facing backward. In substance, the intersection between the vertical median plane of the motorcycle 1 and the portion of fairing that forms the covering 31 defines two curves, one mainly convex facing forward and the other mainly concave, facing backward.

The two surfaces 31a and 31b can be formed by two separate metal sheets, joined to each other along the leading edge 31c.

In advantageous embodiments, in a side view the part of front outer surface 31a of the covering 31 that defines the convex portion projects forward forming an ogival-shaped or bulb-shaped portion of the fairing 21, which reduces the aerodynamic drag coefficient of the motorcycle.

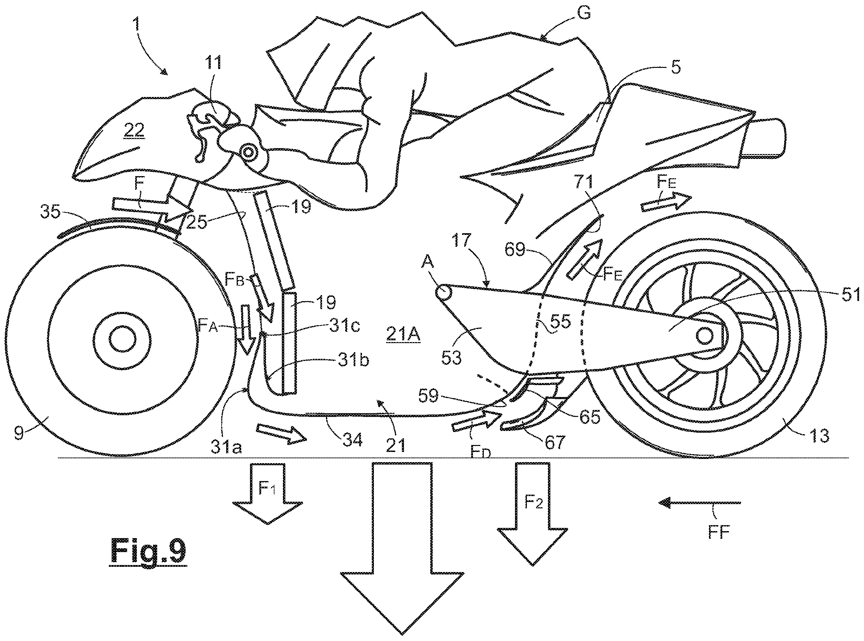

The front outer surface 31a joins to the lower outer surface of the bottom 34 of the fairing defining an acceleration profile of the air flow that laps the front outer surface 31a and the lower outer surface of the fairing 21, so as to generate a reduction in the air pressure, which increases the ground adhesion of the motorcycle during travel. In Fig.9 this adhesion force is indicated with F1.

In advantageous embodiments, the rear inner surface 31b of the aerodynamic profile formed by the covering 31 extends from the leading edge 31c downward and slopes backward, toward the radiator 19. In other words, in a side view the profile defined by the rear inner surface 31b along the median plane of the motorcycle 1 has a distance from the radiator that decreases moving from the leading edge 31c toward the lower part of the covering 31, i.e., toward the bottom 34 of the fairing 21, extending under the engine 7. When the motorcycle 1 moves forward, the air flow entering the volume inside the fairing behind the surface 31b decelerates along said surface 31b, with consequent increase in pressure, which contributes to the adhesion force F1.

The function of the covering 31 described above is illustrated in particular in Fig.4. During the forward movement of the motorcycle 1, an air flow F is generated between the front steered wheel 9 and the upper front part of the fairing 21, which can flow both over and under a front mudguard 35 and which has a component directed downward. The upper part of the fluid stream forming the air flow F directly impacts the radiator 19, with a high velocity component orthogonal to the front surface of the radiator 19, so as to pass through the radiator 19. The lower portion of the fluid stream forming the air flow F has a high vertical velocity component, directed downward. The portion of flow directed downward encounters the leading edge 31c and is divided into a front partial flow FA and into a rear partial flow FB.

In a side view, the front partial flow FA laps the front outer surface 31a of the covering 31 and is diverted (arrow FC, Fig.4) between the bottom 34 of the fairing 21 and the ground, generating a force directed downward as a result of the acceleration along the front outer surface 31a and the ogival portion defined thereby.

The rear partial flow FB laps the rear inner surface 31b of the covering 31 and penetrates the channel defined between the rear inner surface 31b and the front surface of the radiator 19, lapping the front surface of the radiator 19 as a result of the component of velocity directed downward of the flow FB. The rear partial flow FB is decelerated with consequent increase in pressure and flows gradually through the radiator 19.

The aerodynamic shaped profile of the front outer surface 31a and of the rear inner surface 31b limits the risk of separation of the fluid stream along the surfaces and thus improves the fluid-dynamic behavior.

The deceleration of the partial flow FB in the flow pocket or channel formed between the front surface of the radiator 19 and the rear inner surface 31b of the covering 31 pushes the air through the radiator 19. The partial flow FB thus contributes efficiently to the removal of heat from the radiator 19.

In this way, the air flow F generated between the front steered wheel 9 and the upper part of the fairing 21 is utilized optimally, to cool the fluid coolant of the engine 7. Moreover, the covering 31 protects the inside of the fairing 21 from the entry of detritus and sharp objects, such as stones, which could damage mechanical members, such as the radiator. The inflow of hot air, pumped from the ground by the front steered wheel 9 in the event of very high environmental temperatures, is also reduced, with consequent improvement of the cooling conditions of the engine 7.

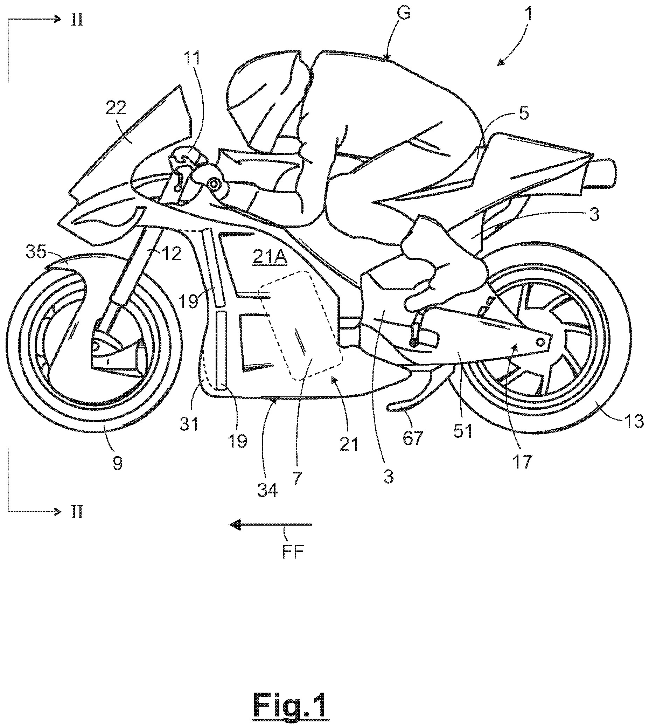

In the embodiment illustrated in the accompanying drawings, and in particular in Figs. 1, 7, 8 and 9, the rear fork 17 comprises two support arms 51 of the rear driving wheel 13. The two arms 51 are connected to each other by a joining structure 53 which forms a block also defining the hinge connecting the rear fork 17 to the frame of the motorcycle.

The joining structure 53 comprises a rear surface 55 facing the rear driving wheel 13. As can be seen in particular in Figs.7 and 9, in a side view, or more precisely in a sectional view along a vertical median plane of the motorcycle 1, the rear surface 55 has a lower portion that is joined to a rear portion 59 of the fairing 21. The rear portion 59 of the fairing extends from the bottom 34 of the fairing 21 upward and faces the ground and the rear driving wheel 13.

In practical embodiments, the rear surface 55 can have, in aside view, or more precisely in a sectional view along a vertical median plane of the motorcycle 1, a portion approximately parallel to the perimeter surface of the rear driving wheel 13. In some embodiments, the profile of the rear surface 55 along a vertical median plane of the motorcycle, as shown in Fig.7, can be such as to define, together with the profile of the rear driving wheel 13, a channel converging slightly in the direction of the air flow that is generated between the rear driving wheel 13 and the rear surface 55.

In practical embodiments, in a vertical median plane of the motorcycle 1 the rear surface 55 of the joining structure 53 defines a profile or curve (shown in Figs. 7 and 9), which is substantially tangent to the rear portion 59 of the fairing 21, so as to form, together with the perimeter surface of the rear driving wheel 13, an air diffusion channel.

In practice, on the vertical median plane of the motorcycle 1 the rear portion 59 of the fairing 21 and the rear surface 55 of the joining structure 53 form a curve whose first derivative is continuous in the area of transition from the rear surface 55 and the rear portion 59.

In this way, the rear portion 59 of the fairing 21 and the rear surface 55 of the joining structure 53 define a guide profile of the air flow around the rear driving wheel 13.

In some embodiments, the joining structure 53 and the rear portion 59 of the fairing 21 can be configured so as to maintain a continuity of the surface defining the diffusion channel of the air flow around the rear driving wheel 13 regardless of the pivoting movement of the rear fork 17 around the axis A, for example as a result of the load represented by the driver G, or as a result of movements caused by roughness of the ground and/or by dynamic effects. For example, for this purpose the two mutually tangent surfaces of the rear portion 59 of the fairing 21 and of the joining structure 53 can have areas slidably coupled to each other.

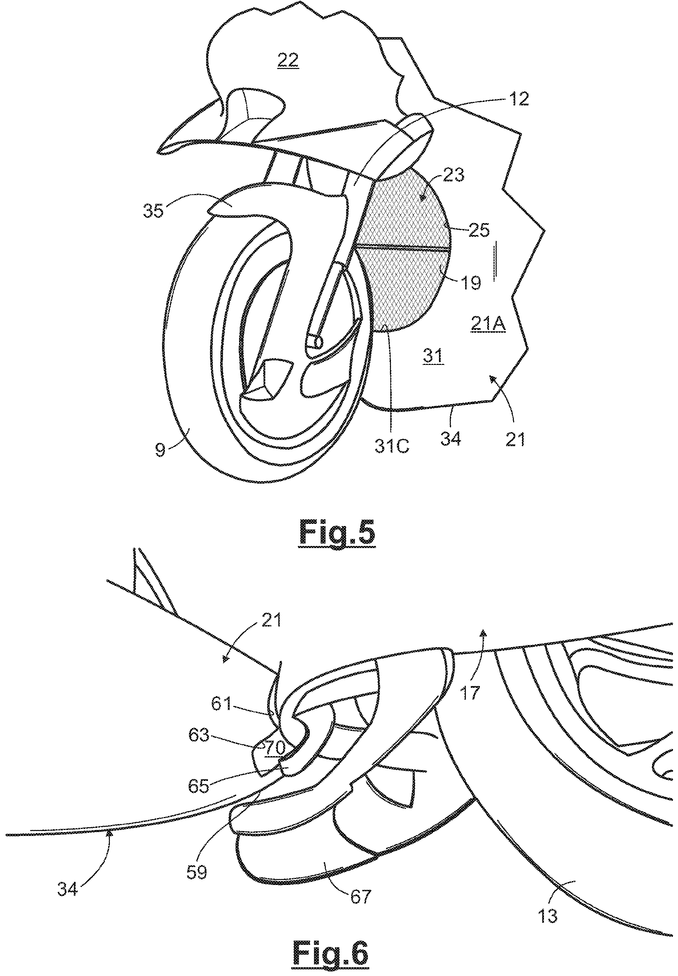

In the illustrated embodiment, the rear portion 59 of the fairing 21 has an upper end edge 61 (Fig.6) facing the fork 17, which is spaced from said fork. Moreover, the upper end edge 61 is provided with a notch 63 facing the rear fork 17. A deflector 65, of a shape complementary to the notch 63, is integral with the rear fork 17. In an angular position of the rear fork 17 the deflector 65 is approximately flush with the inside of the notch 63 to form a substantially continuous surface. When the rear fork 17 rotates upward around the axis A with respect to the aforesaid position, the deflector 65 moves away from the rear portion 59 of the fairing 21 causing a gap 70 to open in the rear portion 59 of the fairing, in front of which gap the deflector 65 is positioned. This forms a guide profile for the air flow exiting from the inside of the fairing 21 through the gap defined by the notch 63, forcing this flow through the channel defined between the perimeter surface of the rear driving wheel 13 and the rear surface 55 of the joining structure 53.

In this way a guide for the air flow is obtained around the rear portion of the fairing 21 and between the rear surface 55 of the joining structure 53 of the fork 17 and the rear driving wheel 13, improving the flow conditions, reducing phenomena of vorticity that cause an increase in the rolling resistance of the motorcycle and also optimizing cooling conditions of the rear driving wheel 13 as a result of the air flow guided in the flow channel.

Acceleration of the air flow around the rear portion 59 of the fairing 21 toward the rear surface 55 of the joining structure 53 also causes an aerodynamic effect with a force directed downward, which increases the ground adhesion of the motorcycle 1 (arrow F2 in Fig.9).

This adhesion can be further increased using an upside down airfoil 67 integral with the rear fork 17 and positioned under the plane on which the rotation axis of the rear driving wheel 13 and the hinge axis A of the rear fork 17 lie. The airfoil 67 is upside down, in the sense that the high pressure surface, along which the air flow decelerates, is facing upward and the low pressure surface, along which the air flow accelerates, is facing downward. The leading edge of the airfoil 67 is facing forward and the trailing edge is facing toward the rear driving wheel 13 and is located in front of the rear driving wheel 13 with respect to the direction of forward movement (arrow FF) of the motorcycle 1.

In particularly advantageous embodiments, a rear mudguard 69 with a rear surface 71 facing the rear driving wheel 13 can be fixed to the rear fork 17. In a side view, and in particular in a sectional view along a vertical median plane of the motorcycle 1, the rear surface 71 of the rear mudguard 69 can be substantially tangent to the rear surface 55 of the joining structure 53, as can be seen in particular in Fig.7. In substance, the rear surface 71 of the rear mudguard 69 intersects the vertical median plane of the motorcycle 1 along a profile that forms the extension of the profile defined by the intersection of the rear surface 55 and of the rear portion 59 of the fairing 21 with the vertical median plane.

This defines a flow channel extending around the rear driving wheel 13 for a portion of the extension of this later that can reach as far as the upper area of the rear driving wheel 1, under the seat of the motorcycle 1 along which the air flow FE is guided. This flow channel provides an efficient guide for the air flow FE generated by the forward movement of the motorcycle 1, a reduction in aerodynamic drag and an effective cooling on the rear tire.

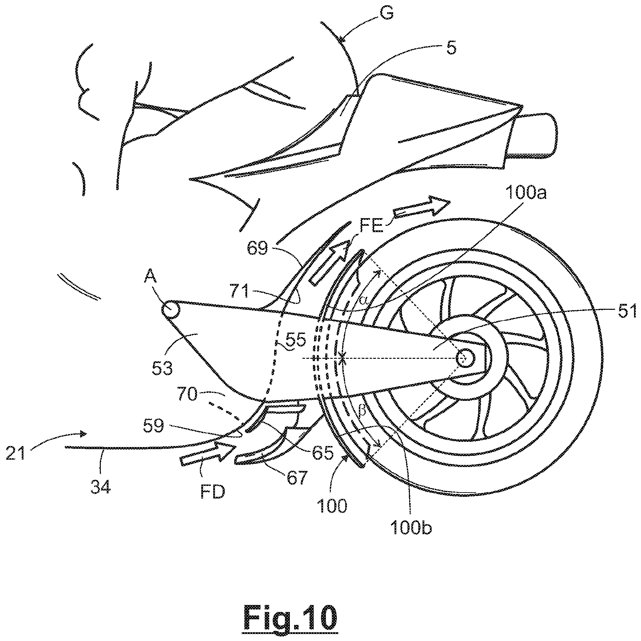

Fig. 10 shows a view similar to the view of Fig.7, of an improved embodiment. In particular, this embodiment provides solutions aimed at optimizing the effect of the flow generated by the structure of the rear fork 17, and in particular of its rear surface 55, in combination with the rear portion 59 of the fairing 21.

As can be seen in Fig. 10, a shield 100, which extends around the perimeter surface of the tire of the rear driving wheel 13, is arranged between the two arms 51 of the fork 17. As can be understood by looking at Fig. 10, the shield 100 can be in the form of a wall with a three-dimensional curvature, substantially corresponding to the curvature of the tire of the rear driving wheel 14, positioned at a certain distance from the tread of said tire. In practice, the surface of the shield 100 facing the rear driving wheel 13 can form an envelope of the rear driving wheel 13, at a preferably constant distance therefrom.

The shield 100 has an upper portion 100a and a lower portion 100b. In the illustrated embodiment, the portion 100a has an angular extension equal to an angle α and the portion 100b has an angular extension equal to an angle β. In some embodiments, the angular extension of the two portions 100a, 100b, and hence the total angular extension of the shield 100, can be fixed. A set of shields with different angular extensions can be provided to adapt the motorcycle 1 to different riding conditions, for the purposes clarified below. In other embodiments, the two portions 100a, 100b can be movable one with respect to the other, so as to overlap to a larger or smaller extent and consequently vary the total angular extension thereof. This variation can be controlled manually, for example by making the two portions 100a and 100b in two parts fixable one with respect to the other in variable angular positions. In other, more sophisticated, embodiments, the angular extension of the shield 100 can be modified with a servo-assisted system, optionally by means of a control accessible to the driver G during riding. For this purpose, an electric, pneumatic or hydraulic actuator can be provided. It would also be possible to control lengthening and shortening of the shield 100 by means of a mechanical control with an operating member positioned on the handlebar or otherwise accessible to the driver during riding.

The function of the shield 100 is to shield the tire of the rear driving wheel 13to a greater or lesser extent, as a function of its angular extension (α+β). In this way, by shielding the tire of the rear driving wheel 13 to a greater or lesser extent, the temperature of the tire can be adjusted, i.e., a greater or lesser cooling effect of the tire can be imparted as a result of the air flow conveyed in the channel formed by the rear portion 59 of the fairing 21 and by the rear surface 55 of the rear fork 17.

The angular extension (α+β) of the shield 100 can be modified (manually or in a servo-assisted manner) as a function of the riding conditions, of the type of tire mounted, of the ambient temperature, of the type of road surface, etc. It would also be possible, in the case of servo-assisted operation, to automate the control of the angular extension of the shield 100 based on a temperature signal generated by a temperature sensor that detects the surface temperature of the rear tire.

Moreover, in the event of rain, the shield 100 prevents the flow of rainwater channeled between the rear surface 59 of the fork and the rear driving wheel 13 from flooding the rear driving wheel 13 during travel. This maximizes the grip in adverse weather conditions.

## Claims

1. A motorcycle (1) comprising:
a frame (3);
an engine (7) mounted on the frame (3);
a front steered wheel (9);
a rear driving wheel (13);
a fairing (21) at least partially surrounding the engine (7) and the frame (3) and having a bottom (34) extending under the engine (7) from a front area of the motorcycle (1) toward the rear driving wheel (13); and
a rear fork (17) hinged to the frame (3) about an axis (A) parallel to a rotation axis of the rear driving wheel (13) and comprising two arms (51) for supporting the rear driving wheel (13), connected to each other by a joining structure (53) having a rear surface (55) facing the rear driving wheel (13);
**characterized in that** a first portion of the rear surface (55) of the joining structure (53) and a rear portion (59) of the fairing (21), which extends from the bottom (34) toward the rear fork (17), together form a diffusion channel for an air flow between the rear fork (17) and the rear driving wheel (13), generated by the forward movement of the motorcycle (1).

2. The motorcycle (1) of claim 1, wherein a second portion of the rear surface (55) of the joining structure (53) is curved and substantially parallel to the profile of the rear driving wheel (13).

3. The motorcycle (1) of claim 1 or 2, wherein in at least one angular position of the rear fork (17), the rear portion (59) of the fairing (21) is substantially tangent to the first portion of the rear surface (55) of the joining structure (53).

4. The motorcycle (1) of claim 1 or 2 or 3, wherein the rear portion (59) of the fairing (21) and the rear surface (55) of the joining structure (53) define a guide profile of the air flow around the rear driving wheel (13).

5. The motorcycle (1) of one or more of the preceding claims, further comprising a rear fender (69) carried by the rear fork (17).

6. The motorcycle (1) of claim 5, wherein the fender (69) comprises a rear surface (71) facing the rear driving wheel (13), forming an extension of the rear surface (55) of the joining structure (53).

7. The motorcycle (1) of claim 6, wherein the rear surface (71) of the fender (69) is substantially tangent to the rear surface (55) of the joining structure (53) of the rear fork (17).

8. The motorcycle (1) of claim 6, wherein the rear portion (59) of the fairing (21), the rear surface (55) of the joining structure (53) and the rear surface (71) of the fender (69) define a guide profile of an air flow around the rear driving wheel (13)

9. The motorcycle (1) of one or more of the preceding claims, wherein the rear portion (59) of the fairing (21) comprises an end edge (61) at a distance from the rear fork (17) to allow an oscillation of the rear fork (17); and wherein the rear fork (17) comprises a deflector (65) adapted to close a gap (63) that is formed between the rear fork (17) and the end edge (61); wherein the deflector (65) is configured to deflect an air flow that flows inside the fairing (21) and exiting from said gap (63) when the motorcycle (1) is moving.

10. The motorcycle (1) of one or more of the preceding claims, wherein the rear fork (17) is integral with an aerofoil (67) rigidly connected to the rear fork (17) placed under a plane containing the rotation axis of the rear driving wheel (13) and the pivot axis (A) of the rear fork (17) to the frame (3); and wherein the aerofoil (67) comprises a forward facing leading edge and a backward facing trailing edge and is oriented so that an air flow generated by the forward movement of the motorcycle (1) generates a force directed toward the ground on the aerofoil (67).

11. The motorcycle (1) of claim 10, wherein the trailing edge of the aerofoil (67) lies in front of the rear driving wheel (13) with respect to the direction of movement of the motorcycle (1).

12. The motorcycle (1) of one or more of the preceding claims, further comprising a screen (100) supported between the two arms (51) of the rear fork (17) and which extends angularly around a portion of the circular extension of the rear driving wheel (13).

13. The motorcycle (1) of claim 12, wherein the screen (100) is interchangeable, or has an adjustable angular extension.

14. The motorcycle (1) of claim 12 or 13, wherein the screen (100) has a concave surface facing the rear driving wheel (17) the shape of which matches the shape of a perimeter surface of a tyre of the rear driving wheel (13).

## Patentansprüche

1. Motorrad (1) mit:
einem Rahmen (3),
einem Motor (7), der auf dem Rahmen (3) montiert ist,
einem gesteuerten Vorderrad (9),
einem hinteren Antriebsrad (13),
einer Verkleidung (21), die mindestens teilweise den Motor (7) und den Rahmen (3) umgibt, mit einem Boden (34), der sich unter dem Motor (7) von einem vorderen Bereich des Motorrads (1) zu dem hinteren Antriebsrad (13) erstreckt, und
einer hinteren Gabel (17), die an dem Rahmen (3) um eine Achse (A) parallel zu einer Drehachse des hinteren Antriebsrads (13) angelenkt ist und zwei Arme (51) zur Stützung des hinteren Antriebsrads (13) aufweist, die miteinander über eine Verbindungsstruktur (53) mit einer hinteren Fläche (55) verbunden ist, die zu dem hinteren Antriebsrad (13) gerichtet ist, **dadurch gekennzeichnet, dass** ein erster Abschnitt der hinteren Fläche (55) der Verbindungsstruktur (53) und ein hinterer Abschnitt (59) der Verkleidung, der sich von dem Boden (34) zu der hinteren Gabel (17) erstreckt, zusammen einen Diffusionskanal für eine Luftströmung zwischen der hinteren Gabel (17) und dem hinteren Antriebsrad (13) bilden, der durch die Vorwärtsbewegung des Motorrads (1) erzeugt wird.

2. Motorrad (1) nach Anspruch 1 wobei ein zweiter Abschnitt der hinteren Fläche (55) der Verbindungsstruktur (53) gebogen ist und im Wesentlichen parallel zu dem Profil des hinteren Antriebsrads (13) ist.

3. Motorrad (1) nach Anspruch 1 oder 2, wobei in mindestens einer Winkelposition der hinteren Gabel (17) der hintere Abschnitt (59) der Verkleidung (21 im Wesentlichen tangential zu dem ersten Abschnitt der hinteren Fläche (55) der Verbindungsstruktur (53) ist.

4. Motorrad (1) nach Anspruch 1 oder 2 oder 3, wobei der hintere Abschnitt (59) der Verkleidung (21) und die hintere Fläche (55) der Verbindungsstruktur (53) Führungsprofil der Luftströmung um das hintere Antriebsrad (13) definieren.

5. Motorrad (1) nach einem oder mehreren der vorstehenden Ansprüche mit ferner einem hinteren Kotflügel (69), der von der hinteren Gabel (17) getragen wird.

6. Motorrad (1) nach Anspruch 5, wobei der Kotflügel (69) eine hintere Fläche (71) aufweist, die zu dem hinteren Antriebsrad (13) gerichtet ist, die einen Fortsatz der hinteren Fläche (55) der Verbindungsstruktur (53) bildet.

7. Motorrad (1) nach Anspruch 6, wobei die hintere Fläche (71) des Kotflügels (69) im Wesentlichen tangential zu der hinteren Fläche (55) der Verbindungsstruktur (53) der hinteren Gabel (17) ist.

8. Motorrad (1) nach Anspruch 6, wobei der hintere Abschnitt (59) der Verkleidung (21), die hintere Fläche (55) der Verbindungsstruktur (53) und die hintere Fläche (71) des Kotflügels (69) ein Führungsprofil für eine Luftströmung um das hintere Antriebsrad (13) definieren.

9. Motorrad (1) nach einem oder mehreren der vorstehenden Ansprüche, wobei der hintere Abschnitt (59) der Verkleidung (21) eine Endkante (61) in einem Abstand von der hinteren Gabel (17) aufweist, um eine Schwingung der hinteren Gabel (17) zu ermöglichen, und wobei die hintere Gabel (17) einen Abweiser (65) aufweist, um eine Lücke (63) zu schließen, die zwischen der hinteren Gabel (17) und der Endkante (61) gebildet ist, wobei der Abweiser (65) ausgebildet ist, um eine Luftströmung umzulenken, die innerhalb der Verkleidung (21) strömt und aus der Lücke (63) austritt, wenn sich das Motorrad (1) bewegt.

10. Motorrad (1) nach einem oder mehreren der vorstehenden Ansprüche, wobei die hintere Gabel (17) integral mit einer Tragfläche (67) ist, die starr mit der hinteren Gabel (17) verbunden ist, die unter einer Ebene angeordnet ist, die die Drehachse des hinteren Antriebsrads (13) und die Schwenkachse (A) der hinteren Gabel (17) zu dem Rahmen (3) enthält, und wobei die Tragfläche (67) eine nach vorn gerichtete vordere Kante und eine nach hinten gerichtete hintere Kante aufweist und so orientiert ist, dass eine Luftströmung, die durch die Vorwärtsbewegung des Motorrads (1) erzeugt wird, eine Kraft erzeugt, die auf der Tragfläche (67) zu dem Boden gerichtet ist.

11. Motorrad (1) nach Anspruch 10, wobei die Vorderkante der Tragfläche (67) vor dem hinteren Antriebsrad (13) mit Bezug auf die Bewegungsrichtung des Motorrads (1) liegt.

12. Motorrad (1) nach einem oder mehreren der vorstehenden Ansprüche mit ferner einer Abschirmung (100), die zwischen den beiden Armen (51) der hinteren Gabel getragen wird und die sich winkelmäßig um einen Teil der kreisförmigen Ausdehnung des hinteren Antriebsrads (13) erstreckt.

13. Motorrad (1) nach Anspruch 12, wobei die Abschirmung (100) austauschbar ist oder einen einstellbaren Winkelansatz aufweist.

14. Motorrad (1) nach Anspruch 12 oder 13, wobei die Abschirmung (100) eine konkave Fläche aufweist, die zu dem hinteren Antriebsrad (17) gerichtet ist, wobei ihre Form zu einer Umfangsfläche eines Reifens des hinteren Antriebsrads (13) passt.

## Revendications

1. Une motocyclette (1) comprenant :
un cadre (3)
un moteur (7) monté sur le cadre (3) ;
une roue de direction avant (9) ;
une roue motrice arrière (13) ;
un carénage (21) entourant au moins partiellement le moteur (7) et le cadre (3) et ayant un fond (34) s'étendant sous le moteur (7) depuis une zone avant de la motocyclette (1) vers la roue motrice arrière (13) ; et
une fourche arrière (7) articulée au cadre (3) autour d'un axe (A) parallèle à un axe de rotation de la roue motrice arrière (13) et comprenant deux bras (51) pour supporter la roue motrice arrière (13), connectés l'un à l'autre par une structure de jonction (53) ayant une surface arrière (55) faisant face à la roue motrice arrière (13) ;
**caractérisée en ce qu'**une première partie de la surface arrière (55) de la structure de jonction (53) et une partie arrière (59) du carénage (21), qui s'étend depuis le bas (34) vers la fourche arrière (17), forment ensemble un canal de diffusion pour un flux d'air entre la fourche arrière (17) et la roue motrice arrière (13), engendré par le mouvement vers l'avant de la motocyclette (1).

2. La motocyclette (1) selon la revendication 1, dans laquelle une deuxième partie de la surface arrière (55) de la structure de jonction (53) est incurvée et sensiblement parallèle au profil de la roue arrière motrice (13).

3. La motocyclette (1) selon la revendication 1 ou 2, dans laquelle au moins une position angulaire de la fourche arrière (17), de la partie arrière (59) du carénage (21) est sensiblement tangentielle à la première partie de la surface arrière (55) de la structure de jonction (53).

4. La motocyclette (1) selon la revendication 1 ou 2 ou 3, dans laquelle la partie arrière (59) du carénage (21) et la surface arrière (55) de la structure de jonction (53) définissent un profil de guidage du flux d'air autour de la roue motrice arrière (13).

5. La motocyclette (1) selon l'une ou plusieurs des revendications précédentes, comprenant en outre un garde-boue arrière (69) porté par la fourche arrière (17).

6. La motocyclette (1) selon la revendication 5, dans laquelle le garde-boue (69) comprend une surface arrière (71) faisant face à la roue motrice arrière (13), formant une extension de la surface arrière (55) de la structure de jonction (53).

7. La motocyclette (1) selon la revendication 6, dans laquelle la surface arrière (71) du garde-boue (69) est sensiblement tangentielle à la surface arrière (55) de la structure de jonction (53) de la fourche arrière (17).

8. La motocyclette (1) selon la revendication 6, dans laquelle la partie arrière (59) du carénage (21), la surface arrière (55) de la structure de jonction (53) et la surface arrière (71) du garde-boue (69) forment un profil de guidage d'un flux d'air autour de la roue motrice arrière (13).

9. La motocyclette (1) selon l'une ou plusieurs des revendications précédentes, dans laquelle la partie arrière (59) du carénage (21) comprend un bord terminal (61) à distance de la fourche arrière (17) pour permettre une oscillation de la fourche arrière (17) ; et dans laquelle la fourche arrière (17) comprend un déflecteur (65) apte à fermer un espace (63) qui est formé entre la fourche arrière (17) et le bord terminal (61) ; le déflecteur (65) étant configuré pour dévier un flux d'air qui circule à l'intérieur du carénage (21) et sort dudit espace (63) lorsque la motocyclette (1) se meut.

10. La motocyclette (1) selon l'une ou plusieurs des revendications précédentes, dans laquelle la fourche arrière (17) est d'un seul tenant avec une aile (67) rigidement connectée à la fourche arrière (17) placée sous un plan contenant l'axe de rotation de la roue arrière motrice (13) et l'axe de pivotement (A) de la fourche arrière (17) du cadre (3) ; et dans lequel l'aile (67) comprend un bord avant tourné vers l'avant et un bord arrière tourné vers l'arrière et est orientée de sorte qu'un flux d'air engendré par le mouvement avant de la motocyclette (1) engendre sur l'aile (67) une force dirigée vers le sol.

11. La motocyclette (1) selon la revendication 10, dans laquelle le bord arrière de l'aile (67) se situe en face de la roue motrice arrière (13) par rapport à la direction de déplacement de la motocyclette (1).

12. La motocyclette (1) selon l'une ou plusieurs des revendications précédentes, comprenant en outre un écran (100) supporté entre les deux bras (51) de la fourche arrière (17) et qui s'étend angulairement autour d'une partie de l'extension circulaire de la roue arrière motrice (13).

13. La motocyclette (1) selon la revendication 12, dans laquelle l'écran (100) est interchangeable ou a une extension angulaire réglable.

14. La motocyclette (1) selon la revendication 12 ou 13, dans laquelle l'écran (100) a une surface concave faisant face à la roue motrice arrière (17) et dont la forme correspond à la forme d'une surface périmétrique d'un pneu de la roue motrice arrière (13).
